# EUROPEAN PATENT APPLICATION

(11) **EP 2 765 684 A2**
(43) Date of publication of application: **13.08.2014**
(21) Application number: 14154072.4
(22) Date of filing: 06.02.2014
(51) Int. Cl.: H02K 1/20

(54) **Rotating electrical machine**

(30) Priority: 08.02.2013 JP 2013022805
(71) Applicant: Hitachi, Ltd., Chiyoda-ku Tokyo (JP)
(72) Inventor: Iwano, Ryuichiro, Tokyo, 100-8280 (JP); Yoshimura, Fumitaka, Tokyo, 100-8280 (JP)
(74) Representative: Beetz & Partner

(57) **Abstract**

A rotating electrical machine having a ventilation cooling structure in which an unevenness of wind amounts in ventilating ducts (7) of a stator (1) caused by an influence of a swirling stream from a rotor (3) is eliminated, thereby enhancing cooling performance and preventing a function of fixedly supporting laminated steel sheets in the axial direction from being deteriorated, wherein ventilating holes (13) are formed at a plurality of positions in the radial direction of spacers (8) of the stator (1) and the adjacent ventilating ducts (7) are communicated so that a coolant flows through the ventilating holes from the duct on the side of a large wind amount toward the duct on the side of a small wind amount.

## Description

### BACKGROUND OF THE INVENTION

The invention relates to an improvement of a stator of a rotating electrical machine and, more particularly, to a structure for cooling a stator of a rotating electrical machine in which a rotor rotates bidirectionally such as an electric motor for a rolling mill or the like.

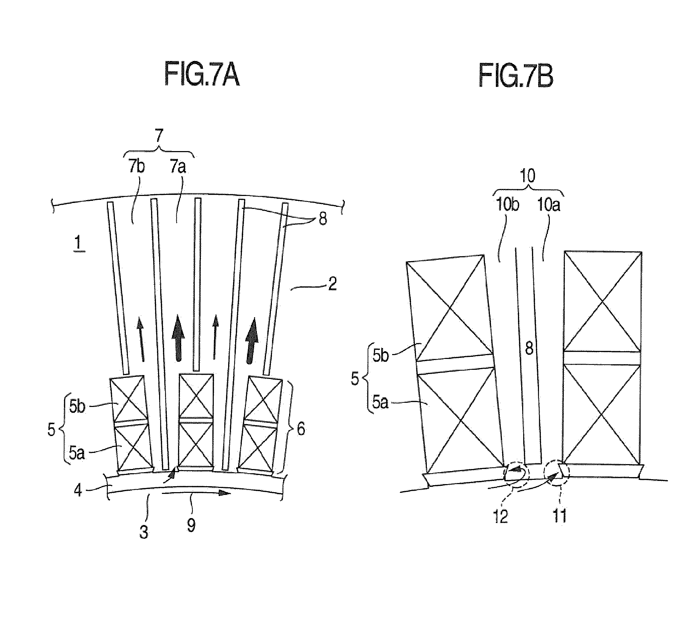

Generally, in a rotating electrical machine such as electric motor, generator, or the like, it is necessary to cool a winding/coil and a core of each of a rotor and a stator and a cooling structure for such a purpose is provided. As a typical cooling structure of the stator, there is such a structure that ventilating ducts in a radial direction are formed in the stator and a coolant is supplied into the ducts, thereby cooling the winding/coil and the core. An example of the stator having such a cooling structure is shown in Figs. 7A and 7B.

In a stator 1 of Fig. 7A, cores 2 formed by steel sheets laminated in an axial direction are attached on an outer peripheral side of a rotor 3 through predetermined gap 4, and a slot 6 to enclose a winding/coil 5 is formed on an inside diameter side of the core 2. A ventilating duct 7 is formed by inserting a spacer 8 between the steel sheets forming the cores 2. The ventilating ducts 7 in the radial direction are formed by almost radially arranging the spacers 8 so that a longitudinal direction of the spacer 8 coincides with the radial direction. A coolant passes in ventilating ducts (not shown) of the rotor 3 from the inside diameter side toward an outside diameter side and cools the rotor 3. After that, the coolant similarly passes in the ventilating ducts 7 of the stator 1 from the inside diameter side toward the outside diameter side. At this time, the coolant cools the stator windings/coils 5 and the cores 2 and flows out from the outside diameter side of the stator.

The coolant which flowed out from the rotor 3 has the same swirling (rotating) velocity component as that in a rotating direction 9 of the rotor. Therefore, the coolant obliquely flows into the ventilating ducts 7 of the stator 1. Such a state is illustrated in FIG. 7B. In this example, between teeth portion ventilating ducts 10 divided into two portions in the circumferential direction by the spacer 8, a pressure at an entrance of a duct 10a on the leading side in the rotating direction rises by a collision 11 of the coolant with the side surface of the stator winding/coil 5. On the other hand, at an entrance of a duct 10b on the delay side in the rotating direction, a pressure decreases by a vortex 12 peeled off from the stator winding/coil 5. Thus, a wind amount of the coolant of the duct 10a on the leading side in the rotating direction increases and, contrarily, a wind amount of the coolant of the duct 10b on the delay side in the rotating direction decreases.

When wind amount distribution in the circumferential direction occurs in the ventilating duct of the stator as mentioned above, there is a risk that a cooling ability deteriorates. Therefore, in the related art, a design has been made so as to have enough room in cooling performance in consideration of the existence of unevenness of the wind amounts of the coolant. However, in recent years, it is demanded to further enhance the cooling performance from a request for reduction in costs by miniaturization.

With respect to a structure of the ventilating duct for enhancing the cooling performance, for example, as disclosed in the Official Gazette of JP-A-58-79444, a method whereby by forming a notch at a position where a spacer faces a winding/coil, a ventilation area between the windings/coils which provide a narrowest space is increased by an amount corresponding to a thickness of spacer and a ventilation resistance is reduced has been known.

### SUMMARY OF THE INVENTION

In the foregoing related art, since it is a direct object to increase the ventilation area of the ventilating duct, there is such a problem that the position of the notch is limited to the facing position of the winding/coil. In the rotating electrical machine serving as a target of the invention as described in Figs. 7A and 7B, widths in the circumferential direction of the structures in slots such as windings/coils are almost constant with respect to the whole core teeth portion. Therefore, in the case of the uniform slot width serving as a target of the invention, if it is intended to increase the ventilation area, it is necessary that the spacer is notched for the whole teeth portion. However, since the spacer has not only a role for forming the ventilating duct but also a role for fixedly supporting the laminated steel sheets in the axial direction in order to prevent the laminated steel sheets from being loosened, it is difficult to notch the whole teeth portion. Therefore, such a related art cannot be applied.

According to the present invention, it is possible to provide a rotating electrical machine having such a ventilation cooling structure that by eliminating an unevenness of wind amounts in ventilating ducts of a stator which is caused by an influence of a swirling stream from a rotor, cooling performance is enhanced and a function of fixedly supporting laminated steel sheets in the axial direction is not deteriorated.

According to the present invention, it is possible to provide a rotating electrical machine in which in the case where a rotor rotates bidirectionally like an electric motor or the like for a rolling mill, the foregoing technical subject can be accomplished in any rotating direction.

According to a preferred embodiment of the invention, there is provided a rotating electrical machine in which ventilating holes are formed at a plurality of positions in a radial direction of spacers of a stator and ventilating ducts are communicated in such a manner that, between the adjacent ventilating ducts, a coolant flows through the ventilating holes from the duct on the side of a large wind amount toward the duct on the side of a small wind amount.

That is, there is provided a rotating electrical machine comprising a stator and a rotor arranged in the stator through air gaps, in which the stator has cores formed by laminating steel sheets, spacers are radially arranged among the steel sheets, and ventilating ducts are formed in a radial direction, wherein ventilating holes are formed at a plurality of positions in the radial direction of the spacers and the ventilating ducts are communicated in such a manner that, between the adjacent ventilating ducts, a coolant flows through the ventilating holes from the duct on the side of a large wind amount toward the duct on the side of a small wind amount.

As described in the paragraphs of the background, in the stator duct teeth portion, a pressure of the duct on the leading side in the rotating direction of the rotor in which the wind amount of the coolant is large is high and a pressure of the duct on the delay side in the rotating direction of the rotor in which the wind amount of the coolant is small is low. According to the invention, since the coolant flows in the circumferential direction from the duct of the high pressure to the duct of the low pressure through the ventilating holes formed in the spacers, the wind amounts of the coolant of the ventilating ducts are uniformed. Thus, degrees of rising of temperatures of the coolant in the stator ventilating ducts are also uniformed. Heat transfer coefficients between the cores and the coolant are also similarly uniformed. Therefore, temperatures of the cores and the windings/coils which are in contact therewith are also uniformed. Consequently, the highest temperature of the cores and the windings/coils is reduced and the cooling performance of the stator is enhanced.

Since such an effect of the invention that the wind amounts of the coolant in the ventilating ducts are uniformed is valid irrespective of the rotating direction of the rotor, the invention can be applied as a stator cooling structure of the rotating electrical machine in which the rotor rotates bidirectionally such as an electric motor for the rolling mill or the like.

Other objects, features and advantages of the invention will become apparent from the following description of the embodiments of the invention taken in conjunction with the accompanying drawings.

### BRIEF DESCRIPTION OF THE DRAWINGS

Fig. 1 is an explanatory diagram of a first embodiment of a stator of a rotating electrical machine of the invention;
Fig. 2 is a diagram taken along the line A-A in Fig. 1;
Figs. 3A and 3B are enlarged diagrams of a ventilating hole for describing a second embodiment as a modification of the first embodiment, in which Fig. 3A is a diagram showing a state where the ventilating hole of a spacer is seen from the axial direction and Fig. 3B is a diagram taken along the line A-A in Fig. 3A;
Fig. 4 is an explanatory diagram of a third embodiment as a modification of the first embodiment;
Fig. 5 is an explanatory diagram of a fourth embodiment of the stator of the rotating electrical machine of the invention;
Figs. 6A and 6B are explanatory diagrams of a fifth embodiment of the stator of the rotating electrical machine of the invention, in which Fig. 6A is a diagram showing a state where a ventilating hole of a spacer is seen from the axial direction and Fig. 6B is a diagram taken along the line A-A in Fig. 6A; and
Figs. 7A and 7B are explanatory diagrams illustrating a stator of a rotating electrical machine in the related art.

### DESCRIPTION OF THE EMBODIMENTS

Embodiments will be described hereinbelow with reference to the drawings.

### [Embodiment 1]

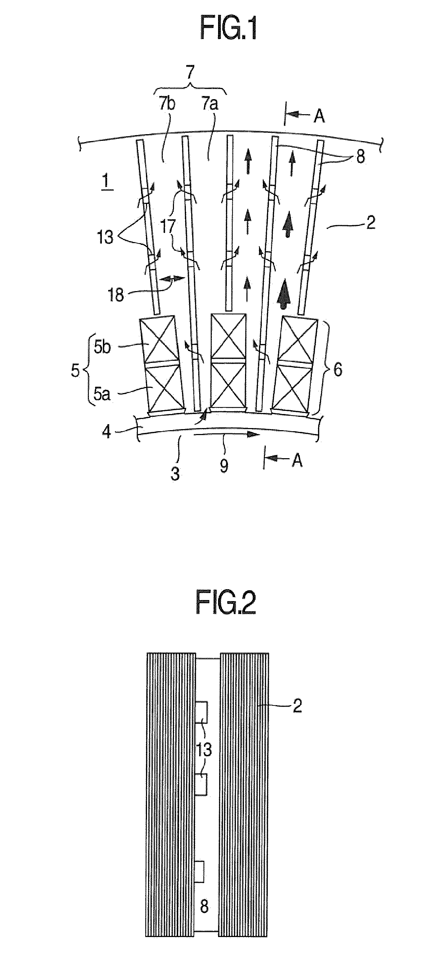

The first embodiment of a rotating electrical machine according to the invention will be described with reference to Figs. 1 and 2. A schematic construction of the first embodiment is almost similar to that of the foregoing related art except for a structure of a spacer.

Also in the embodiment, a cooling structure for cooling a winding/coil and a core of each of a rotor and a stator is provided. According to the cooling structure of the stator, ventilating ducts in the radial direction are formed in the stator and a coolant is supplied to each duct, thereby cooling the winding/coil and the core.

In the stator 1 of Fig. 1, the cores 2 formed by the steel sheets laminated in the axial direction are attached on the outer peripheral side of the rotor 3 through the predetermined gap 4, and the slot 6 to enclose the winding/coil 5 is formed on the inside diameter side of the core 2. The ventilating duct 7 is formed by inserting the spacer 8 between the steel sheets forming the cores 2. The ventilating ducts 7 in the radial direction are formed by almost radially arranging the spacers 8 so that the longitudinal direction of the spacer 8 coincides with the radial direction. The coolant passes in the ventilating ducts (not shown) of the rotor 3 from the inside diameter side toward the outside diameter side and cools the rotor 3. After that, the coolant similarly passes in the ventilating ducts 7 of the stator 1 from the inside diameter side toward the outside diameter side. At this time, the coolant cools the stator windings/coils 5 and the cores 2 and flows out from the outside diameter side of the stator.

A heat generated from the stator windings/coils 5 is mainly transferred to the cores 2 by a heat conduction and is radiated from the cores 2 to the ventilating ducts 7. A part of the heat is directly radiated from the windings/coils 5 to the coolant in the ventilating ducts 7. In a general rotating electrical machine, a width in the axial direction of the ventilating duct 7 is equal to about a few millimeters. On the other hand, a thickness in the axial direction of the core 2 sandwiched between the adjacent ventilating ducts is so large to be equal to a value which is larger than the duct width by about a few times to ten times. Therefore, as mentioned above, a radiating path in which the heat is temporarily transferred from the stator windings/coils 5 to the cores 2 by the heat conduction and is radiated from the cores 2 to the ventilating ducts 7 is most important. In addition to it, the cores 2 themselves also generate the heat. Therefore, when the cooling performance of the stator 1 is enhanced, it is necessary to sufficiently assure a radiation amount from the core 2 to the ventilating duct 7.

As described in the related art, since the coolant flowed from the rotor 3 has the same swirling (rotating) velocity component as that in the rotating direction 9 of the rotor, the coolant obliquely flows into the ventilating ducts 7 of the stator 1. By such an influence, since wind amount distribution prejudiced toward the circumferential direction (non-uniform distribution of wind amounts) occurs in the ventilating ducts 7 of the stator, there is a risk that the cooling performance deteriorates as mentioned below. First, a degree of temperature rising of the coolant in a ventilating duct (in this example, duct 7b on the delay side in the rotating direction) in which the wind amount has decreased increases. In a simplest case, for example, it can be estimated in such a manner that when the wind amount is reduced into the half, the temperature rising degree is equal to about 2 times. According to an experimental equation of Dittus-Boelter, since a heat transfer coefficient from the core 2 to the coolant is proportional to the power of 0.8 of the wind velocity, for example, if the wind amount is reduced into the half, the heat transfer coefficient decreases by 43% and the temperature of the core at a position where it is in contact with the relevant ventilating duct rises. Thus, the coolant wind amounts and the coolant temperatures in the ventilating ducts 7 of the stator 1 become uneven in the circumferential direction and a duct (in this example, duct 7b on the delay side in the rotating direction) in which a degree of contribution to the cooling is small occurs. Since an upper limit of the temperature rising is restricted by the highest temperature in terms of a design, it is desirable that a degree of such unevenness is small.

In the rotating electrical machine in which the rotor 3 rotates bidirectionally such as an electric motor for a rolling mill or the like, it is necessary to pay an attention to such a fact that when the rotating direction 9 changes, the ventilating duct 7 in which a ventilation amount increases and the duct in which a ventilation amount decreases are exchanged.

In the embodiment, in order to eliminate the unevenness of the ventilation amounts in the circumferential direction as mentioned above, a ventilating hole 13 is formed at one position in a slot teeth portion of the spacer 8 and ventilating holes 13 are formed at two positions in a core back portion, thereby communicating adjacent ventilating ducts 7a and 7b in the circumferential direction. As described in the paragraphs of the background, a wind amount and a pressure of the ventilating duct 7a on the leading side in the rotating direction 9 of the rotor 3 is larger and higher. Therefore, in the ventilating hole 13, a flow 17 of the coolant occurs in the direction from the ventilating duct 7a in which the pressure is high toward the ventilating duct 7b in which the pressure is low. By such a flow 17, the unevenness of the wind amounts of the coolant between the ventilating ducts 7a and 7b is eliminated and distribution of the flow rates in the circumferential direction in the ventilating ducts are uniformed. Thus, the degrees of temperature rising of the coolant in the ventilating ducts 7 and the heat transfer coefficients between the cores and the coolant are also uniformed in the circumferential direction, and the temperature distribution in the circumferential direction of the cores 2 and the windings/coils 5 are also uniformed. Therefore, the local highest temperature is reduced and the cooling performance is enhanced.

By forming the ventilating holes 13 at a plurality of positions in the radial direction of the spacer 8, a distance in the radial direction at which the spacer 8 and the core 2 are not come into contact with each other is shortened and the positions where they are not come into contact with each other can be dispersed. Therefore, the function of fixedly supporting the laminated steel plates (sheets) in the axial direction can be maintained.

It is necessary that a total area of the ventilating holes 13 of one spacer 8 is set so that a ventilation resistance does not become too large. If the area of the ventilating passage changes suddenly, the ventilation resistance increases. In order to avoid such an increase in ventilation resistance, it is desirable to set the total area of the ventilating holes 13 to a value which is almost equal to the ventilation area of one ventilating duct 7 sandwiched between the adjacent spacers 8.

For example, it is now assumed that a height in the axial direction of the ventilating hole 13 is set to the half of a height in the axial direction of the spacer 8. In this case, a ventilating hole having a length in the radial direction which is equal to about 2 times as the width 18 of the ventilating duct existing at an average radius position is necessary. If it is intended to realize such a construction by one ventilating hole, typically, a ventilating hole having a length in the radial direction which is equal to about 1/3 of a difference between the inside diameter and the outside diameter of the core 2 is necessary. If such a single large ventilating hole is used, the function of fixedly supporting the laminated steel plates (sheets) in the axial direction cannot be maintained. Therefore, it is indispensable to form the ventilating holes 13 at a plurality of positions in the radial direction of the spacer.

### [Embodiment 2]

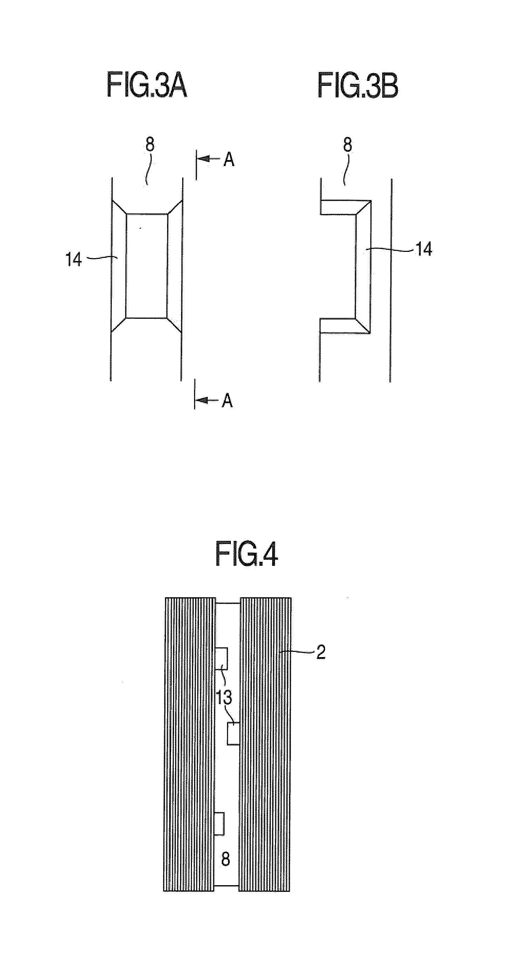

In the embodiment 1, the ventilating holes 13 are formed by notching one side of the spacer into a rectangular shape. Although each ventilating hole 13 is formed so as to have corners in Figs. 1 and 2, such a structure that the shape of the ventilating hole 13 is changed in order to reduce the ventilation resistance is a modification of the invention which is naturally considered. One of such modifications is illustrated in Figs. 3A and 3B. Ordinarily, one of the shapes which are most frequently used is a chamfering 14 of corners. If such a chamfering is performed, the ventilation resistance is reduced to about the half of that in the case where there are corners. According to the shape of the ventilating hole like a modification, as compared with the shape of the ventilating hole having the corners of the same area, a ventilation coolant wind amount of the ventilating hole increases. Therefore, there is such an advantage that the effect of uniforming the coolant wind amount distribution is enhanced. Or, since almost the same coolant wind amount uniforming effect as that in the case of the ventilating hole having the corners is obtained by the area of the smaller ventilating hole, a deterioration of the function of fixedly supporting the laminated steel plates (sheets) in the axial direction can be minimized. A shape of an exit/entrance of the ventilating hole 13 is not limited to the chamfering. For example, by forming the ventilating hole with curved corners, a ventilation loss can be also further reduced.

### [Embodiment 3]

Although the notches for the ventilating holes are formed only on one side of the spacer in the embodiment 1 in Fig. 2, the notches may be formed on both sides. Such another modification is shown in Fig. 4. Ordinarily, although a case where a compression force which acts on the spacer 8 becomes a problem is small, in the case of the same ventilating hole area, if the notches are formed on both sides, a pressure of the contact surface between the spacer 8 and the core 2 can be held to be lower than that in the case where the notches are formed on one side. In the embodiment, there is such an advantage that when a force of fastening the core in the axial direction is large, the reliability of the structure can be held to be higher.

### [Embodiment 4]

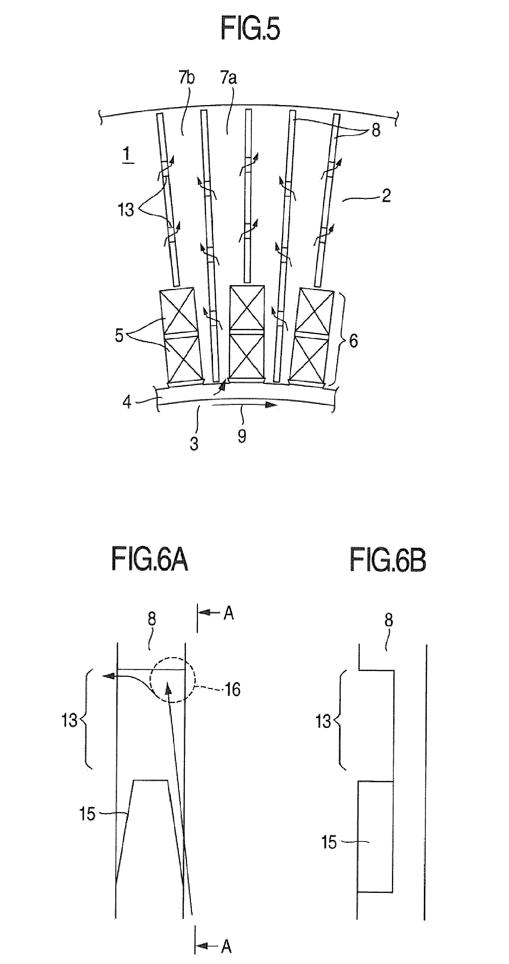

The fourth embodiment of the rotating electrical machine according to the invention is illustrated in Fig. 5. In the embodiment, the ventilating holes 13 of the adjacent spacers 8 are formed at radius positions which are mutually deviated. As shown in the diagram, the coolant flows into the ventilating duct 7b in which the pressure is low and a coolant flow rate is small from the adjacent ventilating ducts 7a on both sides of the duct 7b through the ventilating holes 13. If the ventilating holes 13 of the adjacent spacers 8 are formed at the same radius positions like as shown in the embodiment of Fig. 1, there is a risk that the coolants which flowed in from both sides collide and the ventilation resistance is increased. On the other hand, by making the radius positions of the ventilating holes 13 different from those of the adjacent spacers 8 as shown in the embodiment 4, there is such an advantage that the collision of the coolants which flowed in from both sides is prevented, the flow in the ventilating duct 7 is smoothed, and an increase in ventilation resistance can be prevented.

### [Embodiment 5]

The fifth embodiment of the rotating electrical machine according to the invention will be described with reference to Figs. 6A and 6B. In the embodiment 5, a taper portion 15 is provided on the inner side in the radial direction of the ventilating hole 13 (upstream side of the ventilating duct) in such a manner that a width in the circumferential direction of the spacer becomes narrow gradually toward the ventilating hole. According to such a construction, since the coolant flowing in the ventilating duct flows along the taper portion 15, the coolant collides with the outside diameter side of the entrance of the ventilating hole 13 (downstream side of the ventilating duct). By a collision 16 of the coolant, the pressure at the entrance of the ventilating hole rises, an amount of coolant flowing from the ventilating duct 7a to the ventilating duct 7b increases, and there is such an advantage that the effect of uniforming the coolant flow rate distribution in the ventilating duct 7 is enhanced.

According to the construction as shown in the embodiments described above, the coolant wind amount distribution in the circumferential direction in the stator ventilating duct that is caused by the influence occurring because the coolant which flows in from the rotor is the swirling stream can be uniformed, so that the temperature distribution is also uniformed and the highest temperature can be reduced. By forming the ventilating holes at a plurality of positions in the radial direction of the spacer, while the necessary ventilation area is assured, the function of fixedly supporting the laminated steel plates (sheets) in the axial direction can be maintained. Further, according to the construction of the invention, since the same effect can be maintained irrespective of the rotating direction of the rotor, it is the cooling structure which is valid even in the case where the rotating direction changes like a rotating electrical machine for the rolling mill.

Although the case where there is one spacer of one slot teeth portion has been shown as an example in all of the embodiments 1 to 5 as mentioned above, a structure in which a plurality of spacers are arranged is not excluded. For example, if the number of slots is relatively small and the width in the circumferential direction of the teeth is large, there is a case where a plurality of spacers are arranged. Even in such a case, by similarly forming the ventilating holes, the flow rate distribution of the coolant can be uniformed.

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

## Claims

1. A rotating electrical machine comprising a stator (1) and a rotor (3) arranged in the stator through air gaps, in which the stator has cores (2) formed by laminating steel sheets, spacers (8) are radially arranged among the steel sheets, and ventilating ducts (7) are formed in a radial direction,
wherein the rotating electrical machine has ventilating holes (13) formed at a plurality of positions in the radial direction of the spacers and the ventilating ducts are communicated through the ventilating holes.

2. A machine according to claim 1, wherein exit and entrance ports of the ventilating hole (13) have a chamfered shape (14).

3. A machine according to claim 1, wherein the ventilating holes (13) are formed on both sides in the axial direction of the spacer (8).

4. A rotating electrical machine comprising a stator (1) and a rotor (3) arranged in the stator through air gaps, in which the stator has cores (2) formed by laminating steel sheets, spacers (8) are radially arranged among the steel sheets, and ventilating ducts (7) are formed in a radial direction,
wherein the rotating electrical machine has ventilating holes (13) formed at a plurality of positions in the radial direction of the spacers, the ventilating ducts are communicated through the ventilating holes, and the ventilating holes (13) of the spacers (8) which are adjacent in the circumferential direction are formed at radius positions which are deviated from each other.

5. A rotating electrical machine comprising a stator (1) and a rotor (3) arranged in the stator through air gaps, in which the stator has cores (2) formed by laminating steel sheets, spacers (8) are radially arranged among the steel sheets, and ventilating ducts (7) are formed in a radial direction,
wherein the rotating electrical machine has ventilating holes (13) formed at a plurality of positions in the radial direction of the spacers, and the ventilating hole (13) has a taper portion (15) in which, on the inside diameter side of the ventilating hole, a width of the spacer (8) becomes narrow toward the ventilating hole.
